Europäisches Patentamt

European Patent Office

Office européen des brevets

(11) Publication number: **0 168 890**
A1

# EUROPEAN PATENT APPLICATION

(21) Application number: **85201144.4**

(22) Date of filing: **09.07.85**

(51) Int. Cl.⁴: **G 01 G 11/00**, G 01 F 1/30

(30) Priority: **10.07.84 DK 3376/84**

(43) Date of publication of application: **22.01.86**
**Bulletin 86/4**

(84) Designated Contracting States: **AT BE CH DE FR GB IT LI NL SE**

(71) Applicant: **JESMA A/S, Niels Finsensvej 4, DK-7100 Vejle (DK)**

(72) Inventor: **Johansen, Mogens, Boelskilde 18, DK-7100 Vejle (DK)**

(74) Representative: **Urbanus, Henricus Maria, Ir. et al, c/o Vereenigde Octrooibureaux Nieuwe Parklaan 107, NL-2587 BP 's-Gravenhage (NL)**

(54) A weighing apparatus for dynamic weighing of a falling material flow.

(57) A weighing apparatus for dynamic weighing of a falling material flow and of the type comprising an inclined weighing plate (28) to be hit by the material flow and thereby be pressed rearwardly against a weighing cell (29), the weighing plate (28) being suspended in a swinging link suspension. According to the invention the weighing plate (28) is mounted on a carrier arm (26) protruding from the bottom member (24) of the swinging link suspension, and the pivots (22) of the suspension are designed to resist the resulting vertical pull and pressure forces. The suspension and its associated weighing plate (28) and weighing cell (29) is produceable as a compact unit, which is easy to adjust and to mount in a unit carrying cabinet.

0168890

The present invention relates to an apparatus for continuous dynamic weighing of a flow of a falling material such as grain or feedstuff and of the type comprising an inclined weighing plate to be hit by the falling material, the weighing plate being suspended in a swinging link suspension such that it is horizontally displaceable against a weighing cell or another displacement or pressure gauge in response to its being hit by the falling material. The inclined weighing plate will deflect the material flow and thus be subjected to both a downward and a horizontally rearward pressure all according to the momentum of the successive cross sections of the material flow. It is possible on this basis to carry out a continuous weighing of the flow, and it is known to do so based on a counterbiased displacement of the weighing plate in either the vertical or the horizontal direction, as disclosed e.g. in the Swedish Patent Specification No. 368,742.

In practice it is preferred to make use of the horizontal displacement force on the weighing plate as the basis of the weighing, because the force will hereby be of a purely dynamical origin, such that any possible change of the self-weight of the plate, e.g. by material particles sticking to the plate, will not affect the accuracy of the weighing. In this connection, however, it is a condition that the weighing plate be guided in a horizontal path with extremely low friction for meeting the modern very high requirements as to the weighing accuracy. In the said Swedish specification an example of a pure slide guiding of the weighing plate is given, but such a guiding should be rejected due to the associated unavoidable friction. In another example in the same specification the weighing plate is mounted on a laterally projecting, horizontal lever, which is pivoted in a pin bearing having a vertical axis and

0168890

located well spaced from the side of the weighing plate; by the action of the material flow the unit consisting of the weighing plate and the said lever will pivot rearwardly against the bias of a weighing cell or pressure gauge, and hereby the friction of the moved system may be very low. However, such an arrangement will be undesirable for other reasons and particularly because the horizontal force as acting on the weighing plate is converted into momentum, which, for a given force, will be depending of the location of the sub area of the weighing plate which is actually hit by the material flow; a given force applied to the plate nearer to or farther from the vertical pivot axis of the unit, respectively, will condition mutually different weighing results, and in practice it is very difficult to provide for the material flow to fall onto the inclined weighing plate at one very well defined sub area thereof.

In the respect here discussed a better solution is disclosed in the USA Patent Specification No. 2,872,074, which shows an apparatus of a type which is more relevant to the invention. In that disclosure the inclined weighing plate itself is suspended in a system of vertical and equally long pendulum wires fastened pivotally to the respective upper and lower edge areas of the weighing plate and at their upper ends secured pivotally to suitable frame portions of the apparatus, such that the weighing plate is mounted in and horizontally guided by a suspension of the parallellogram or swinging link type. From the rear side of the weighing plate a pressure rod projects horizontally rearwardly, and the free end of this rod abuts a weighing cell, which is rigidly supported by a frame portion of the apparatus. With this design it will be at least principally unimportant whether the material flow hits the weighing plate in one or another sub area thereof, though with the particular detailed design it is less lucky that the pendulum wires and their end pivots will enable the weighing plate to "edge" if the material flow does not hit the plate in a sub area thereof which is symmetrical about the vertical middle line of the plate. Another and very serious drawback of this apparatus is that the apparatus frame should be built and maintained with very fine tolerances for enabling the weighing plate to be suspended with such a degree of accuracy which will be required for achieving a sufficient weighing accuracy according to modern requirements.

It is the purpose of the invention to provide a dynamic weighing apparatus of the type referred to, which is produceable as a compact unit of a simple and robust design and nevertheless so as to show a very high weighing accuracy.

According to the invention the inclined weighing plate is mounted on a rearwardly projecting carrier arm, which is rigidly connected with a bottom member of the swinging link suspension system, this suspension system as a whole being located behind the weighing plate and comprising parallel, non-flexible pendulum rods, the upper and lower ends of which are connected with an upper rigid top member of the swinging link suspension and the said bottom member thereof, respectively, through hinge portions of the type constituted by thin and broad strip portions, which are flexible in the moving direction of the bottom member of the swinging link suspension, while they are stiff against both pull and pressure in the axial direction of the pendulum rods, the said top and bottom members of the suspension being provided with respective downwardly and upwardly projecting, vertically overlapping bracket portions, between which the weighing cell is mounted with horizontal orientation.

Hereby no carrier structure will be required just above the inclined weighing plate, i.e. the required carrier structure will not interfere with the means for supplying the falling material flow to the weighing plate, and the carrier structure will not have to be constituted partly by the coarse frame structure of the apparatus. The stationary carrier structure as constituted by the said top member of the swinging link suspension behind the weighing plate may be a compact and separate unit, which is fastenable to an apparatus frame in a rather uncritical manner as far as the frame is concerned. The same compact unit as comprising the entire suspension system also carries and includes the weighing cell, such that this cell should not be mounted and adjusted separately on the apparatus frame. Thus, the entire qualified weighing system including the weighing cell and the movable system with its associated weighing plate may be designed and assembled as a compact unit and adjusted under highly qualified production conditions, whereafter the mounting in and the general adjustment of the weighing system in an apparatus chassis or cabinet may be effected in a less qualified manner. The compact system or unit may be designed so as to be both very robust and very accurate, such that expensive after-adjustments and repairs with the users of the weighing devices can be widely eliminated.

With the use of a vertically hanging swinging link suspension as here desirable for the establishment of a natural zero point position of the movable system it will be principally possible - as disclosed in the said USA Patent Specification No. 2,872,074 - to make use of draw stiff pendulum elements, but with the invention it is a special circumstance that the weighing plate is mounted spaced in front of the entire suspension

5

0168890

system, whereby the bottom member of the suspension is not affected by straight downward forces, but by a momentum in the vertical plane; the vertical suspension links nearest to the weighing plate will be subjected to a downward pull originating from the weight of the weighing plate and its carrier arm as well as from the vertical component of the deflection reaction between the weighing plate and the material flow, and these forces seek to pivot the bottom member of the suspension about the lower ends of the foremost suspension links, whereby the opposed, rear suspension links are not subjected to a downward pull, but inversely to an upward pressure. For this reason the invention prescribes the suspension links to be non-flexible, and it is also required that the associated pivot connections at the ends of the links should be able to transfer the said pressure without any play.

These pivot or hinge connections themselves constitute a qualified problem, because as mentioned they should be both frictionless and at the same time stiff to both pull and pressure. In hanging swinging link suspensions it is known to use pivot connections in the form of precision roller bearings, but these are expensive and may well produce a noticeable friction by intruding dust and by even microscopic rest deformations. It is also known to use flexible carrier bands, which may well form both frictionless and dust-insensitive pivot connections with the associated elements, by they are not resistant to pressure. In connection with the invention it has been recognized that the requirement of the suspension links being non-flexible or pressure resistant may well be reconciled with the upper and lower pivots being constituted by flexible local sub portions of the links, i.e. portions of small dimensions in the longitudinal direction of the suspension links as well as in the cross direction corresponding to the moving direction of the bottom member of the suspension, such that these portions constitute short and relatively broad strap-like connections, which are flexible in a frictionless manner and yet able to transfer not only longitudinal pulling forces, but even longitudinal pressing forces without any noticeable change of their length dimension, which is here important for the achievement of a desired high weighing accuracy.

It should be mentioned that it is well known in the art of weighing, generally, that flexible strap-like material portions are usable as pivots or hinges which are able to take up the required pulling forces, but it seems to be a novel concept that such portions may be designed or used to additionally resist longitudinal pressure forces.

Another result of arranging the pivots as flat and flexible strap-like material portions will be that these portions, by themselves, will act orientingly on the flexing in the hinge areas, such that the flexing will take place only in the desired plane of movement of the suspension system, whereby it is ensured that the movement takes place in this plane or direction even if the weighing plate is hit by the material flow in an asymmetrical manner. Thus, a well oriented guiding of the moving system is obtained without extra and frictional guiding means.

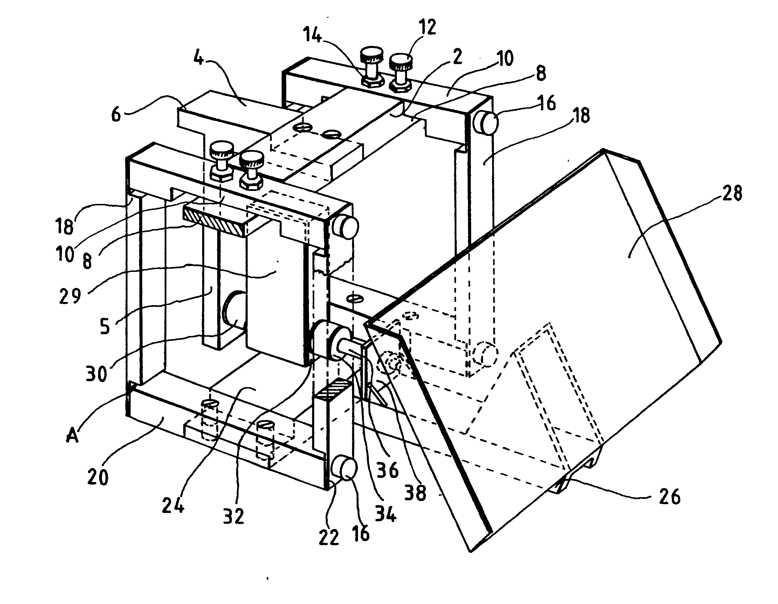

In the following the invention is described in more detail with reference to the accompanying drawing, which is a perspective view of a weighing apparatus according to the invention.

The apparatus shown comprises an upper cross member 2, which carries an angular member 4 having a depending portion 5 and a rear mounting protrusion 6. The opposed ends 8 of the cross member 2 support a pair of parallel, upper horizontal carrier arms 10, which are held so as to be adjustable by means of adjustment bolts 12 with check nuts 14. On each of the ends of the carrier arms 10 is mounted, by means of a bolt 16, a depending suspension link 18, the lower ends of these links being pairwise interconnected by lower horizontal elements 20, which are parallel with the upper carrier arms 10 and are interconnected by a block member 24. To the front side of this block member is secured a forwardly protruding carrier beam 26, the front end portion of which carries an upstanding, inclined plate member 28. The links 18, which may suitably be of steel such as stainless steel, are at their ends, 22, shaped with reduced thickness to such a degree that the thin end portions 22 are flexible, while the main portions of the links are practically non-flexible.

On the depending portion 5 of the member 4 is mounted a vibration damper 30, which acts as a lateral support for the rear edge of a weighing cell 29, the opposite front edge portion 32 of which is connected, through a vibration damper 34 and a threaded pin 36, with a pressure plate 38 mounted rigidly on the carrier beam 26.

In a manner not shown the described unit is mounted in a suitable cabinet with the carrier beam projecting freely through a hole in the cabinet and thus with the inclined plate 28 located outside the cabinet. The mounting protrusion 6 is used for the fastening of the unit to a suitable carrier frame of the cabinet. It will be understood that the unit behind the inclined plate 28 constitutes a parallellogram or swinging link suspension, the bottom portion of which is movable substantially horizontally in the direction of the beam 26, pivot movements hereby occurring in the narrow, strap-like end portions 22 of the links 18, viz. in free hinge areas designated A and having a relatively short length in the axial direction of the links 18.

8 0168890

Thus, when hit by a falling material flow the inclined weighing plate 28 may yield to the left, rearwardly, whereby the pressure plate 38, through the pin 36 and the vibration dampers 34 and 30, will transfer the horizontal pressure of the weighing plate 28 to the weighing cell 29, and the weighing cell hereby produces a signal which is indicative of the weight of the material as instantly hitting the weighing plate 28. It is known in the art and needs no further description that the weighing cell signal can be processed for indication of the weight or the accumulated weight and/or for controlling other operations such as a dosage of some additive to the material flow in accordance with the successive weight thereof.

The pressure as hereby experienced by the weighing cell will be entirely independent of the vertical forces in the system, including the weight of the weighing plate 28 and the vertical component of the reaction force between this plate and the falling material flow. The weight of the weighing plate 28 and the carrier beam 26 will be taken up by the two foremost suspension links 18, while the two rearmost links 18 will be subjected to an axial pressure rather than a pull. However, the hinges A are well suited to transfer both a pull and a pressure without getting axially deformed and without loosing their character of non-frictional hinges.

The weighing cell 29 is of the strain gauge type, which operates with very small compression movements, whereby the operative horizontal movements of the weighing plate and the bottom system 20,24 of the suspension may be very small. The resilient vibration dampers 30 and 34 are of a type which is only slightly axially compressible, such that the required horizontal moving range of the lower part of the suspension system is kept very small, i.e. the hinge portions A will be flexed to a very small degree only, whereby they can easily be designed with a small axial length so as to resist both pulling and pressing forces without changing their axial dimension and without presenting any high flexing resistance.

The operative movement of the lower part of the suspension is not exactly horizontal, but arched from or through a purely horizontal direction, although the deviations from that direction will be very small because of the small length of the movements. The vibration damper 34, however, is crosswise flexible, whereby the very small vertical components of said movements will cause no strain problems in the system.

Moreover, with the use of two dampers 30 and 34 of a standard type made of an electrically insulating material the weighing cell 29 will be galvanically separated from the other parts of the unit, whereby welding works may be carried out in the surroundings of the already mounted, weighing cell without the cell being damaged thereby. The weighing cell, of course, will additionally be mechanically protected against shocks and vibrations.

It will be appreciated that the unit shown and described is produceable as a compact and robust construction at relatively low costs. Should the apparatus as consisting of the weighing unit and its associated cabinet be slightly damaged, e.g. during transportation to a customer, it will be relatively easy to readjust the unit on the spot, without the apparatus having to be returned to the manufacturer.

The hinge areas A, of course, attract special attention. They are insensitive to dust and are or should be reasonably easily flexible, while at the same time they should be mechanically resistant to both pulling and pressing forces in the axial direction of the associated links 18 inasfar as even the slightest changes in the mechanical structure of the unit may result in a noticeable inaccuracy of the weighing results. Excellent results have been obtained by laterally cutting down the end portions of a massive stainless steel rod 18 for forming the broad end strap portions 22, but a similar result could be obtained by cutting a side notch into the steel rod only along the effective length A of the hinge portion. Another possibility is to make use of rigid link members 18, e.g. of a stiff ceramic material, to the ends of which is secured suitably flexible and pressure resistant strap elements substituting the integral end portions 22.

It will be understood that the hinge portions A should not only be flexible and axially stiff against pulling and pressing forces, but also stiff against twisting and lateral flexing, such that the lower system of the suspension is guided straightly rearwardly even if the weighing plate 28 is hit by the falling material flow asymmetrically about the vertical middle line thereof.

11                    0168890

What Is Claimed Is:

1.    A weighing apparatus for continuous dynamic weighing of a flow of a falling material and of the type comprising an inclined weighing plate to be hit by the material flow so as to cause the flow to be deflected, the weighing plate being suspended in a swinging link suspension such that it is horizontally displaceable against a weighing cell or another displacement or pressure gauge in response to its being hit by the material flow, characterized in that the weighing plate is mounted on a rearwardly projecting carrier arm, which is rigidly connected with a bottom member of the swinging link suspension system, this system as a whole being located behind the weighing plate and comprising parallel, non-flexible pendulum link rods, the upper and lower ends of which are connected with an upper rigid top member of the swinging link suspension and the said bottom member thereof, respectively, through low-frictional hinge portions operable to resist both pulling and pressing forces without any noticeable play.

2.    A weighing apparatus according to claim 1, in which the said hinge portions are of the type constituted by longitudinally short, thin and broad strip portions, which are flexible in the moving direction of the bottom member of the suspension system.

3.    A weighing apparatus according to claim 1, in which the top and bottom members of the suspension are provided with respective downwardly and upwardly projecting bracket portions, between which the weighing cell is placed with horizontal orientation.

4.    A weighing apparatus according to claim 1, in which the top member of the swinging link suspension comprises a central carrier member supporting individually adjustable carrier elements for the suspension links as depending therefrom.

5.    A weighing apparatus according to claim 3, in which there is mounted, between the weighing cell and at least one of the adjacent bracket portions of the top or bottom member of the suspension, a resilient oscillation damper of an electrically and thermally insulating material.

0168890

## European Patent Office

## EUROPEAN SEARCH REPORT

| | DOCUMENTS CONSIDERED TO BE RELEVANT | | EP 85201144.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y<br>A | DE - B2 - 2 412 258 (PFISTER GMBH)<br> * Fig. 1,2 *<br> * Column 3, lines 45,46 *<br>-- | <br>1-4<br>5 | G 01 G 11/00<br>G 01 F 1/30 |
| Y | US - A - 4 196 784 (SUZUKI et al.)<br> * Fig. 1,2 *<br>-- | 1-4 | |
| A | GB - A - 2 020 038 (MILLTRONICS)<br> * Fig. 1 *<br>-- | 1 | |
| D,A | US - A - 2 872 074 (BIRTWELL et al.)<br> * Fig. 1 *<br>---- | 1 | |
| | | | TECHNICAL FIELDS SEARCHED (Int. Cl.4) |
| | | | G 01 G 11/00<br>G 01 F 1/00 |

The present search report has been drawn up for all claims

| Place of search | Date of completion of the search | Examiner |
|---|---|---|
| VIENNA | 25-10-1985 | BURGHARDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document